# EUROPEAN PATENT APPLICATION

(11) **EP 4 148 239 A1**
(43) Date of publication of application: **15.03.2023**
(21) Application number: 21196201.4
(22) Date of filing: 13.09.2021
(51) Int. Cl.: F01K 13/02

(54) **POWER PLANT DESIGN AND OPTIMIZATION**

(71) Applicant: Siemens Energy Global GmbH & Co. KG, 81739 München (DE)
(72) Inventor: Banchhor, Vikas Kumar, 122001 Gurgaon (IN); Mandal, Rajesh, 110078 New Delhi (IN); Perumal, Varatharaja, 122002 Gurgaon (IN)

(57) **Abstract**

A power plant optimization system (300), a computer implemented method employing the power plant optimization system (300), and a computer program product executing instructions defined by the computer implemented method for optimizing a power plant (100) are provided. The power plant optimization system (300) comprises a data acquisition module (301) that obtains a capacity of the power plant (100) for generating power, and a data processing module (302) that probabilistically determines, based on power plant data associated with multiple power plants (100) and the capacity, an optimal size for valve(s) (201-204) deployable in the power plant (100), and generates, based on the optimal size, a recommendation for design of the valve(s) (201-204) deployable in the power plant (100).

## Description

The present disclosure relates to power plants. More particularly, the present disclosure relates to combined cycle power plants. Furthermore, the present disclosure relates to designing components within the combined cycle power plant.

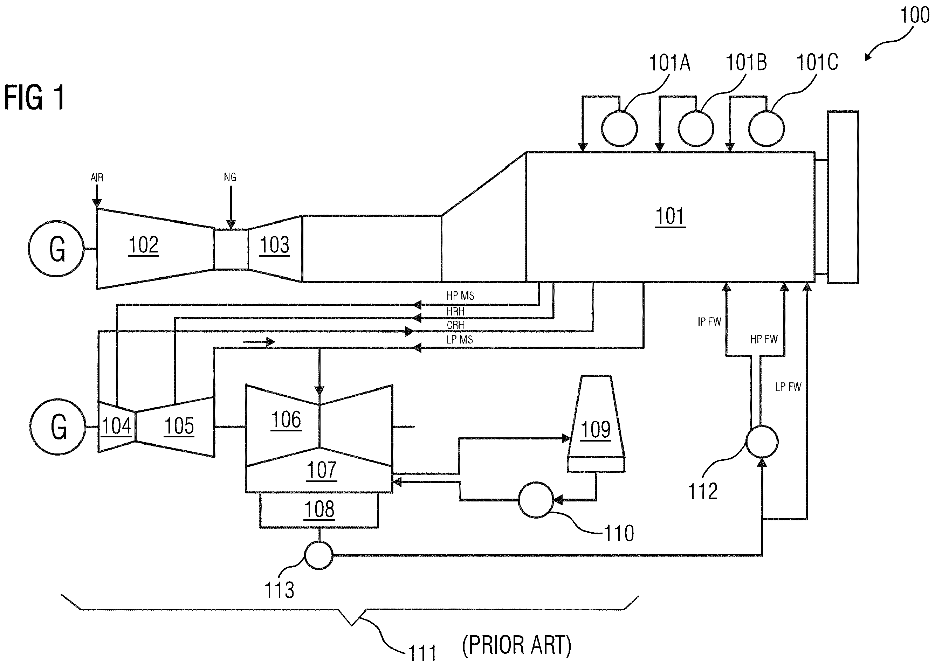

FIG 1 illustrates a power plant 100, according to state of the art. The power plant 100 is a combined cycle power plant including a heat recovery steam generator 101, hereinafter referred to as an HRSG 101. In the combined cycle power plant 100, steam is generated in the HRSG 101 by utilizing heat energy available in exhaust gas of a gas turbine 103 which is operably connected to a compressor 102 receiving air and the HRSG 101. The steam generation process in the HRSG 101 follows Rankine cycle wherein, steam is generated in different pressure systems, for example, a high pressure (HP) system 101A, an intermediate pressure (IP) system 101B, and a low pressure (LP) system 101C to extract the maximum amount of heat from the exhaust gas.

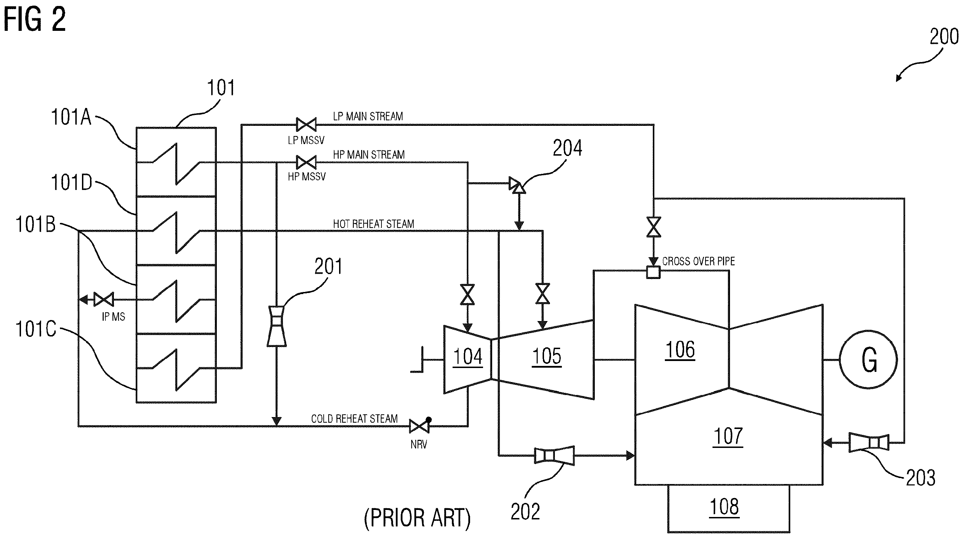

Each of the aforementioned pressure systems 101A, 101B, and 101C supplies the steam generated in the HRSG 101 to the corresponding pressure stages including the HP stage 104, the IP stage 105 and the LP stage 106 of a steam turbine 111. The exhaust steam from the HP stage 104 is routed to Cold Reheat Line (CRH). The steam in the HP stage 104 is mixed with the steam from the IP system 101B of the HRSG 101 before it passes through a reheater (shown in FIG 2 as 101D) of the HRSG 101. The reheater increases enthalpy of the steam released from the IP system 101B as hot reheat line (HRH) which further gets expanded in IP stage 105 of the steam turbine 111 for power generation thereby, increasing the efficiency of the combined cycle power plant 100. The exhaust steam from the IP stage 105 and the steam from the LP system 101C of the HRSG 101 is then fed into the LP stage 106 of the steam turbine 111. The exhaust steam from the LP stage 106 is condensed in the condenser 107 and the condensate is stored in a hot well 108 as feedwater. A cooling tower 109 receives the hot water from the condenser 107 and cools it further. A cooling water pump (CWP) 110 extracts the cold water from the cooling tower 109 and/or any alternative water source and circulates it through the condenser tubes to remove heat energy from the exhaust steam of the LP stage 106 of the steam turbine 111. The feedwater from the hot well 108 is then reused by the HRSG 101 for steam generation. The condensate extraction pump (CEP) 113 extracts the condensate from the hot well 108 and transfers it to the LP system 101C of the HRSG 101 and to the boiler feedwater pump (BFP) 112 which transfers the condensate received from the CEP 113 to the HP, IP and LP systems 101A-101C of the HRSG 101.

FIG 2 illustrates a bypass and warm up system 200 typically used in the combined cycle power plant 100 shown in FIG 1, according to state of the art. The bypass and warmup system 200 includes various valves such as a high pressure (HP) bypass valve 201, an intermediate pressure (IP) bypass valve 202, a low pressure (LP) bypass valve 203, and a warmup valve 204. Each of these valves allows flow of steam therethrough.

Conventionally, in a combined cycle power plant 100, the HP bypass valve 201 is used to bypass main steam line to the cold reheat line during startup event, pressure control event, shut-down event and/or steam turbine trip event. As shown in FIG 2, the exhaust steam carried by the cold reheat line (CRH) coming from the HP stage 104 of the steam turbine 111 mixed with the steam released from the IP system 101B of the HRSG 101, is discharged into the hot reheat line (HRH) via the reheater 101D of the HRSG 101. The IP bypass valve 202 connected to the hot reheat line (HRH) dumps the steam carried therein into the condenser 107. Typically, the Warmup valve 204 is installed upstream of the HP stage 104 of the steam turbine 111 to increase the piping and valve temperature to the startup temperature requirements of the steam turbine 111.

However, the conventional design of the power plant 100 shown in the FIGS 1 and 2 is not optimal, in that, the size of the HP bypass valve 201 is not utilized to its capacity on an average and is therefore, overdesigned. As a result of which, the size and thereby the cost of the HP bypass valve 201 is much higher than it should be. Also, the warmup valve 204 is only utilized during startup conditions which is very low in terms of the operating hours when compared with the overall plant operating hours.

Accordingly, it is an object of the present disclosure to provide a computer-implemented method and a power plant optimization system for designing an optimized bypass valve for a power plant to reduce costs and optimize the overall power plant design and operation.

The aforementioned object is achieved in that a power plant optimization system according to claim 1 and a computer implemented method for optimizing a power plant according to claim 8 are provided. As used herein, the power plant refers to a power generation plant and may include a combined cycle power plant, a coal fired power plant, and/or any other power plant that utilizes bypass valves that allow fluids such as gas, steam, etc., to flow therethrough.

According to an embodiment of the present disclosure, the power plant optimization system is deployable in a cloud computing environment and is accessible to a user using the power plant optimization system via a communication network such as a wired and/or a wireless communication network. As used herein, "cloud computing environment" refers to a processing environment comprising configurable computing physical and logical resources, for example, networks, servers, storage, applications, services, etc., and data distributed over the cloud platform. The cloud computing environment provides on-demand network access to a shared pool of the configurable computing physical and logical resources.

According to another embodiment of the present disclosure, the power plant optimization system is deployable in the power plant as an edge device capable of communicating with monitoring and control software deployed in the power plant. According to this embodiment, the power plant optimization system comprises a processor, a memory unit, a network interface, and/or an input/output unit to function as an edge device. For example, in order to function as an edge device, the aforementioned hardware components are deployed at the power plant in operable communication with the power plant monitoring and control software, and the data, that is, power plant data associated with the power plant, is communicated to the power plant optimization system via the network interface to a cloud-based server wherein the software modules of the power plant optimization system are deployed for processing the data thus received for optimizing the power plant. Moreover, according to this embodiment, there may exist more than one power plant optimization systems deployed as edge devices in various power plants and the edge devices may communicate with one another.

According to yet another embodiment, the parameter tuning system is deployable on a user device such as a computer having the processor, the memory unit, the network interface, the input/output unit, etc.

According to yet another embodiment, the power plant optimization system is deployable in a distributed architecture where parts of the power plant optimization system are deployable in the power plant as an edge device or in the user device and parts in the cloud computing environment.

The power plant optimization system disclosed herein comprises a data acquisition module, a data processing module, and a data analytics module. However, it will be appreciated by a person skilled in the art, that the functionalities offered by each of these modules may be combined into a single processing module.

The data acquisition module obtains a capacity of the power plant, for example, a combined cycle power plant, for generating power. According to one embodiment, this capacity is an intended power generation capacity of a power plant that is being planned for construction. According to another embodidment, the capacity is a that of a power plant already constructed and being optimized.

According to yet another embodiment, the capacity is of multiple power plants already constructed and in operation. Moreover, in this embodiment, the capacities thus obtained are stored in a power plant database of the power plant optimization system. Furthermore, in this embodiment, the data acquisition module also obtains power plant data associated with each of these multiple power plants. As used herein, "power plant data" refers to data associated with construction and operation of the power plant and includes, for example, valve data associated with each valve deployed in the respective power plants and a power output of each generator G deployed in the respective power plants. The valves include bypass valves and/or warm-up valves. Also, used herein "valve data" refers to data associated with each valve and includes, for example, a valve size such as the physical dimensions of the valve, a mass flow data such as the rate of mass flow therethrough, and an outlet pressure of the valve. Advantageously, the power plant data associated with multiple power plants thus obtained is also stored in the power plant databse.

According to this embodiment, the data acquisition module obtains, from the valve data associated with multiple power plants, a percentage mass flow through each of the valves. According to this embodiment, the data acquisition module also obtains, from the power plant data associated with multiple power plants, a duration for the percentage mass flow through each of the valves. According to this embodiment, the data processing module determines from the valves for each of the power plants, based on the percentage mass flow and the duration associated therewith, one or more underutilized valves that allow therethrough the percentage mass flow greater than or equal to a predefined percentage threshold for the duration lesser than or equal to a prescribed time variance.

According to one embodiment, the predefined percentage threshold is a value that may be chosen based on a level of optimization desired by the power plant designers. For example, if a maximum level of optimization is required then this predefined percentage threshold may be set to about 40% such that the valves allowig a steam mass flow therethrough greater than 40% of the net flow capacity are identified. In this case, if the steam mass flow is less than 40% then the valve has potential to be downsized, that is optimized, by up to 60% of its current size, thereby, providing maximum optimization. Thus, the predefined percentage threshold may be a user defined value.

According to another embodiment, the data processing module generates the predefined percentage threshold as a recommendation based on a probabilistic approach by plotting the power plant data of multiple power plants and more specifically the valve data of multiple power plants having same capacity of power generation and/or similar physical characteristics with respect to an average time for which the valve has been operational in each of these plants so as to find a standard probabilistic distribution of the mass flow therethrough. For example, if this probabilistic distribution shows that the mass flow is on an average concentrated in a window of about 60% of the net flow capacity of the valve, then the predefined percentage threshold may be set to 60%.

The aforementioned prescribed time variance is defined based on the capacity, the maximum internal pressure and the maximum internal temperature allowed in a power plant. For example, the prescribed time variance may be defined as about 20% to ensure that stress developed in the power plant as a result of pressure and/or temperature increase beyond the corresponding design values, doesn't exceed the maximum allowable stress by 20% when an event duration occurs for not more than one hour at any one time and not more than eighty hours per year. Thus, as per above example, an underutilized valve is one that allows a mass flow therethrough greater than 60% for a time duration lesser than 20%.

Moreover, the data processing module computes an optimal size for each such underutilized valve based on the percentage mass flow and the predefined percentage threshold and generates, that is, populates the power plant database with the optimal size for each such underutilized valve, the power plant data associated with the corresponding power plant in which the underutilized valve is deployed, and a capacity of generation of the power plant. The data thus stored in the power plant database is utilized for optimization of other power plants.

According to any one of the aforementioned embodiments, where the capacity that the data acquisition module obtains, is of a power plant intended to be constructed and/or optimized, the data processing module probabilistically determines, based on the capacity and power plant data associated with multiple power plants, an optimal size for the valve(s) deployable in the power plant. Advantageously, the data processing module obtains, based on the capacity, the optimal size for the valve(s) from the power plant database. The power plant database comprises an optimal size for each of the valve(s) deployable in the power plant corresponding to the capacity of the power plant, such that there is no underutilization of the valve(s). The data processing module generates, based on the optimal size, a recommendation for design of the valve(s) deployable in the power plant. Advantageously, the recommendation comprises physical size of the valve and/or a net mass flow capacity of the valve.

The data analytics module analyzes the data stored in the power plant database, that is, the power plant data and the capacity of power generation along with the computed optimal sizes for the valve(s) across multiple power plants and generates graphical representation(s) that may help a user of the power plant optimization system to understand which is the best suited size for the valve(s) deployable in the power plant being designed or optimized.

According to an embodiment, the power plant optimization system further optimizes the valve sizes. For example, for a combined cycle power plant, the warm-up valve is typically unused during steam turbine bypass operation. Thus, based on this unused capacity of the warm-up valve and the optimized size of the HP bypass valve and the warm-up valve, the data processing module computes a ratio for distributing the mass flow through the optimized HP bypass valve and the optimized warm-up valve, especially during the steam turbine bypass operation. Based on this mass flow distribution, the data processing module computes a further optimized size of the HP bypass valve by further reducing its original optimal size based on the diverted mass flow through the warm-up valve. Advantageously, this further optimized size of the HP bypass valve is stored in the power plant database. Thus, for a combined cycle power plant, the power plant database may include two possible optimized sizes of the HP bypass valve based on whether or not there is partial diversion of the mass flow through the warm-up valve.

The power plant optimization system according to any one of the aforementioned embodiments is used by a user intending to design a new power plant and optimize the valve sizes and therefore, the costs associated therewith accordingly. According to another embodiment, the power plant optimization system is used by a user intending to optimize an existing power plant by redesigning the valve(s) deployable in the power plant.

Also, disclosed herein is a computer implemented method, employing the aforementioned power plant optimization system, for optimizing a power plant such as a combined cycle power plant. The method comprises obtaining a capacity of the power plant for generating power, probabilistically determining, based on power plant data associated with multiple power plants and the capacity, an optimal size for one or more valves such as bypass valves and warm-up valves deployable in the power plant, and generating based on the optimal size, a recommendation for design of the valve(s) deployable in the power plant.

The power plant data comprises, for example, valve data associated with each of the valves and a power output of each generator deployed in the power plant. The valve data comprises, for example, a valve size of each of the valves, mass flow data associated with each of the valves, and an outlet pressure associated with each of the valves. The method disclosed herein stores the power plant data and the capacity in a power plant database of the power plant optimization system.

The method for probabilistically determining an optimal size for the valve(s), comprises determining, based on the capacity, the optimal size for the valve(s) from the power plant database storing therein an optimal size for each of the valves deployable in the power plant corresponding to the capacity of the power plant, such that there is no underutilization of the valves. The method also comprises generating the power plant database, that is, populating the power plant database with aforementioned data by obtaining, from valve data associated with multiple power plants, a percentage mass flow through each of the valves, obtaining, based on the power plant data associated with multiple power plants, a duration for the percentage mass flow through each of the valves, determining from the valves, based on the percentage mass flow and the duration associated therewith, underutilized valve(s) that allow therethrough the percentage mass flow greater than or equal to a predefined percentage threshold for the duration lesser than or equal to a prescribed time variance. The method computes an optimal size for each of the underutilized valves based on the percentage mass flow and the predefined percentage threshold and stores into the power plant database, the optimal size for each of the underutilized valves, the power plant data associated with the corresponding power plant in which the underutilized valves are deployed, and a capacity of generation of the power plant. The method uses this data for generating recommendations for an optimal size of the valve(s) while designing new power plants or optimizing already running power plants.

The above summary is merely intended to give a short overview over some features of some embodiments and implementations and is not to be construed as limiting. Other embodiments may comprise other features than the ones explained above.

### BRIEF DESCRIPTION OF THE DRAWINGS

The above and other elements, features, steps and characteristics of the present disclosure will be more apparent from the following detailed description of embodiments with reference to the following figures:
- FIG 1: illustrates a power plant, according to state of the art;
- FIG 2: illustrates a bypass and warm up system typically used in the combined cycle power plant shown in FIG 1, according to state of the art;
- FIG 3: illustrates a power plant optimization system for optimizing a power plant, according to an embodiment of the present disclosure;
- FIG 4: is a block diagram illustrating an architecture of a computer system employed by the power plant optimization system shown in FIG 3, for optimizing a power plant, according to an embodiment of the present disclosure; and
- FIGS 5A-5B: illustrate process flow charts of computer-implemented methods for optimizing a power plant, according to various embodiments of the present disclosure.

### DETAILED DESCRIPTION OF EMBODIMENTS

In the following, embodiments of the disclosure will be described in detail with reference to the accompanying drawings. It is to be understood that the following description of embodiments is not to be taken in a limiting sense.

The drawings are to be regarded as being schematic representations and elements illustrated in the drawings, which are not necessarily shown to scale. Rather, the various elements are represented such that their function and general purpose become apparent to a person skilled in the art. Any connection or coupling between functional blocks, devices, components, or other physical or functional units shown in the drawings or described herein may also be implemented by an indirect connection or coupling. A coupling between components may also be established over a wireless connection. Functional blocks may be implemented in hardware, firmware, software, or a combination thereof.

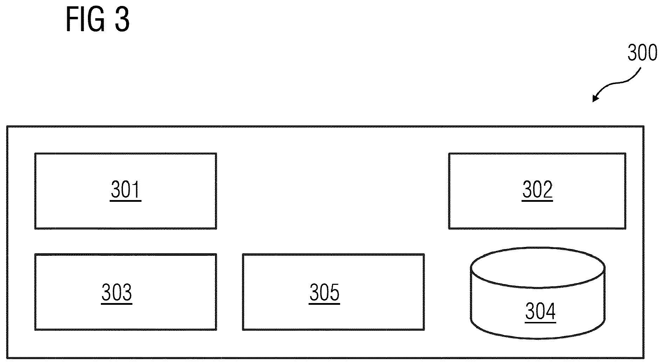

FIG 3 illustrates a power plant optimization system 300 for optimizing a power plant 100 shown in FIG 1, according to an embodiment of the present disclosure.

The power plant optimization system 300, is installable on and accessible by a user device, for example, a personal computing device, a workstation, a client device, a network enabled computing device, any other suitable computing equipment, and combinations of multiple pieces of computing equipment being used by a user. The user device may also be a computer installed in the power plant 100 to control the power plant 100 or a computer used by the power plant designing team to construct a new power plant 100. The power plant optimization system 300 disclosed herein can communicate with one or more external user devices such as devices deployed in a power plant 100 over a communication network (not shown), for example, a wired network, a wireless network, or a network formed by combination thereof.

The power plant optimization system 300 is downloadable and usable on the user device as disclosed above, or is configured as a web-based platform, for example, a website hosted on a server or a network of servers, or, is implemented in the cloud computing environment as a cloud computing-based platform, implemented as a service for optimizing a power plant 100. A user of the power plant optimization system 300 in this case accesses the power plant optimization system 300 via the communication network. The user is typically a power plant designer, a power plant commissioning engineer and/or a power plant operator.

The power plant optimization system 300 disclosed herein comprises a non-transitory computer readable storage medium and at least one processor communicatively coupled to the non-transitory computer readable storage medium. As used herein, "non-transitory computer readable storage medium" refers to all computer readable media, for example, non-volatile media, volatile media, and transmission media except for a transitory, propagating signal. The non-transitory computer readable storage medium is configured to store computer program instructions defined by modules, for example, 301, 302, 303, etc., of the power plant optimization system 300.

The processor is configured to execute the defined computer program instructions. As illustrated in FIG 3, the power plant optimization system 300 comprises a graphical user interface (GUI) 305. A user using the user device can access the power plant optimization system 300 via the GUI 305. The GUI 305 is, for example, an online web interface, a web based downloadable application interface, etc. The power plant optimization system 300 further comprises a data acquisition module 301, a data processing module 302 and a data analytics module 304.

The data acquisition module 301 obtains a capacity of the power plant 100, for example, a combined cycle power plant 100, for generating power. This capacity may be an intended power generation capacity of a power plant 100 which is to be constructed or capacity of a power plant 100 already constructed and being optimized. The data acquisition module 301 also obtains power plant data associated with multiple power plants 100. The power plant data comprises valve data associated with each of valve(s) 201-204 and a power output of each generator G deployed in the power plant 100, as shown in FIG 2. The valve data includes a valve size of each of the valve(s) 201-204, a mass flow data associated with each of the valve(s) 201-204, and an outlet pressure associated with each of the valve(s) 201-204. The power plant databse 304 stores therewithin the power plant data and the capacity obtained by the data acquisition module 301.

The data processing module 302 probabilistically determines, based on the power plant data associated with multiple power plants 100 and the capacity, an optimal size for the valve(s) 201-204 deployable in the power plant 100. The data processing module 302 determines, based on the capacity, the optimal size for the valve(s) 201-204 from the power plant database 304. The power plant database 304 comprises an optimal size for each of the valve(s) 201-204 deployable in the power plant 100 corresponding to the capacity of the power plant 100, such that there is no underutilization of the valve(s) 201-204.

The power plant database 304 is populated with the aforementioned information. For populating the power plant database, the data acquisition module 301 obtains, from the valve data associated with multiple power plants 100, a percentage mass flow through each of the valves 201-204. The data acquisition module 301 also obtains, from the power plant data associated with multiple power plants 100, a duration for the percentage mass flow through each of the valves 201-204. The data processing module 302 determines from the valves 201-204, based on the percentage mass flow and the duration associated therewith, one or more underutilized valves 201-204 that allow therethrough the percentage mass flow greater than or equal to a predefined percentage threshold for the duration lesser than or equal to a prescribed time variance. The data processing module 302 computes an optimal size for each of the underutilized valves 201-204 based on the percentage mass flow and the predefined percentage threshold and generates, that is, populates the power plant database 304 with the optimal size for each of the underutilized valves 201-204, the power plant data associated with the corresponding power plant 100 in which the underutilized valves 201-204 are deployable, and a capacity of generation of the power plant 100.

The data analytics module 303 analyzes the data stored in the power plant database 304, that is, the power plant data and the capacity of power generation along with the computed optimal sizes for the valves 201-204 across multiple power plants 100 and generates graphical representations that may help a user of the power plant optimization system to understand which is the best suited size for the valve(s) 201-204 deployable in the power plant 100. For example, one of the graphical representations may include a plot of valve size with respect to the power generation capacity or a plot of valve size with respect to the mass flow therethrough observed across multiple power plants 100.

The data processing module 302 generates, based on the optimal size, a recommendation for design of the valve(s) 201-204 deployable in the power plant 100.

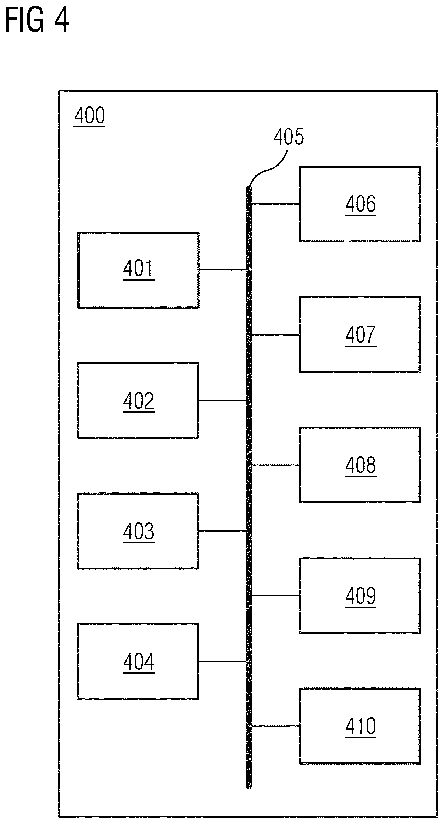

FIG 4 is a block diagram illustrating an architecture of a computer system 400 employed by the power plant optimization system 300 shown in FIG 3, for optimizing a power plant 100, according to an embodiment of the present disclosure.

The computer system 400 is programmable using a high-level computer programming language. The computer system 400 may be implemented using programmed and purposeful hardware. The computer system 400 comprises a processor 401, a non-transitory computer readable storage medium such as a memory unit 402 for storing programs and data, an input/output (I/O) controller 403, a network interface 404, a data bus 405, a display unit 406, input devices 407, a fixed media drive 408 such as a hard drive, a removable media drive 409 for receiving removable media, output devices 410, etc.

The processor 401 refers to any one of microprocessors, central processing unit (CPU) devices, finite state machines, microcontrollers, digital signal processors, an application specific integrated circuit (ASIC), a field-programmable gate array (FPGA), etc., or any combination thereof, capable of executing computer programs or a series of commands, instructions, or state transitions. The processor 401 may also be implemented as a processor set comprising, for example, a general-purpose microprocessor and a math or graphics co-processor. The power plant optimization system 300 disclosed herein is not limited to a computer system 400 employing a processor 401. The computer system 400 may also employ a controller or a microcontroller. The processor 401 executes the modules, for example, 301, 302, 303, etc., of the power plant optimization system 300.

The memory unit 402 is used for storing programs, applications, and data. For example, the modules 301, 302, 303, etc., of the power plant optimization system 300 are stored in the memory unit 402 of the computer system 400. The memory unit 402 is, for example, a random-access memory (RAM) or another type of dynamic storage device that stores information and instructions for execution by the processor 401. The memory unit 402 also stores temporary variables and other intermediate information used during execution of the instructions by the processor 401. The computer system 400 further comprises a read only memory (ROM) or another type of static storage device that stores static information and instructions for the processor 401. The I/O controller 403 controls input actions and output actions performed by the power plant optimization system 300.

The network interface 404 enables connection of the computer system 400 to a communication network (not shown). For example, the power plant optimization system 300 connects to the communication network via the network interface 404. In an embodiment, the network interface 404 is provided as an interface card also referred to as a line card. The network interface 404 comprises, for example, interfaces using serial protocols, interfaces using parallel protocols, and Ethernet communication interfaces, interfaces based on wireless communications technology such as satellite technology, radio frequency (RF) technology, near field communication, etc. The data bus 405 permits communications between the modules, for example, 301, 302, 303, 304, 305, etc., of power plant optimization system 300.

The display unit 406, via the graphical user interface (GUI) 305, displays information such as the power plant data, the capacity of generation of power of the power plant 100, the valve data, the size of each of the valves 201-204, etc., for enabling the user of the power plant optimization system 300 to optimize the power plant 100. The display unit 406, via the GUI 305, also displays information such as user interface elements including text fields, buttons, windows, etc., for allowing a user to provide his/her inputs such as the predefined percentage threshold for determining underutilization of the valves 201-204, etc. The display unit 406 comprises, for example, a liquid crystal display, a plasma display, an organic light emitting diode (OLED) based display, etc. The input devices 407 are used for inputting data into the computer system 400. The input devices 407 are, for example, a keyboard such as an alphanumeric keyboard, a touch sensitive display device, and/or any device capable of sensing a tactile input.

Computer applications and programs are used for operating the computer system 400. The programs are loaded onto the fixed media drive 408 and into the memory unit 402 of the computer system 400 via the removable media drive 409. In an embodiment, the computer applications and programs may be loaded directly via the communication network. Computer applications and programs are executed by double clicking a related icon displayed on the display unit 406 using one of the input devices 407. The output devices 410 output the results of operations performed by the power plant optimization system 300. For example, the power plant optimization system 300 provides graphical representation of the power plant 100 along with the optimal valve sizes and mass flow rates therethrough, using the output devices 410. Alternatively, the graphical representations may include statistics and analytics of the historical data associated with the power plants 100 or a probabilistic representation of the mass flow through the valves 201-204 over a course of time under various events in the power plant 100.

The processor 401 executes an operating system. The computer system 400 employs the operating system for performing multiple tasks. The operating system is responsible for management and coordination of activities and sharing of resources of the computer system 400. The operating system further manages security of the computer system 400, peripheral devices connected to the computer system 400, and network connections.

The operating system employed on the computer system 400 recognizes, for example, inputs provided by the users using one of the input devices 407, the output display, files, and directories stored locally on the fixed media drive 408. The operating system on the computer system 400 executes different programs using the processor 401. The processor 401 and the operating system together define a computer platform for which application programs in high level programming languages are written.

The processor 401 of the computer system 400 employed by the power plant optimization system 300 retrieves instructions defined by the modules 301, 302, 303, etc., of the power plant optimization system 300 for performing respective functions disclosed in the detailed description of FIG 3. The processor 401 retrieves instructions for executing the modules, for example, 301, 302, 303, etc., of the power plant optimization system 300 from the memory unit 402. A program counter determines the location of the instructions in the memory unit 402. The program counter stores a number that identifies the current position in the program of each of the modules, for example, 301, 302, 303, etc., of the power plant optimization system 300. The instructions fetched by the processor 401 from the memory unit 402 after being processed are decoded. The instructions are stored in an instruction register in the processor 401. After processing and decoding, the processor 401 executes the instructions, thereby performing one or more processes defined by those instructions.

At the time of execution, the instructions stored in the instruction register are examined to determine the operations to be performed. The processor 401 then performs the specified operations. The operations comprise arithmetic operations and logic operations. The operating system performs multiple routines for performing several tasks required to assign the input devices 407, the output devices 410, and memory for execution of the modules, for example, 301, 302, 303, etc., of the power plant optimization system 300. The tasks performed by the operating system comprise, for example, assigning memory to the modules, for example, 301, 302, 303, etc., of the power plant optimization system 300, and to data used by the power plant optimization system 300, moving data between the memory unit 402 and disk units, and handling input/output operations. The operating system performs the tasks on request by the operations and after performing the tasks, the operating system transfers the execution control back to the processor 401. The processor 401 continues the execution to obtain one or more outputs. The outputs of the execution of the modules, for example, 301, 302, 303, etc., of the power plant optimization system 300 are displayed to the user on the GUI 305.

For purposes of illustration, the detailed description refers to the power plant optimization system 300 being run locally on the computer system 400, however the scope of the present invention is not limited to the power plant optimization system 300 being run locally on the computer system 400 via the operating system and the processor 401, but may be extended to run remotely over the communication network by employing a web browser and a remote server, a mobile phone, or other electronic devices. One or more portions of the computer system 400 may be distributed across one or more computer systems (not shown) coupled to the communication network.

Disclosed herein is also a computer program product comprising a non-transitory computer readable storage medium that stores computer program codes comprising instructions executable by at least one processor 401 for optimizing a power plant 100. The computer program product comprises a first computer program code for obtaining a capacity of the power plant 100 for generating power; a second computer program code for probabilistically determining based on power plant data associated with multiple power plants 100 and the capacity, an optimal size for the valve(s) 201-204 deployable in the power plant 100; and a third computer program code for generating a recommendation for design of the valve(s) 201-204 deployable in the power plant 100.

In an embodiment, a single piece of computer program code comprising computer executable instructions, performs one or more steps of the computer implemented method according to the present disclosure, for optimizing the power plant 100. The computer program codes comprising computer executable instructions are embodied on the non-transitory computer readable storage medium. The processor 401 of the computer system 400 retrieves these computer executable instructions and executes them. When the computer executable instructions are executed by the processor 401, the computer executable instructions cause the processor 401 to perform the steps of the method for optimizing the power plant 100.

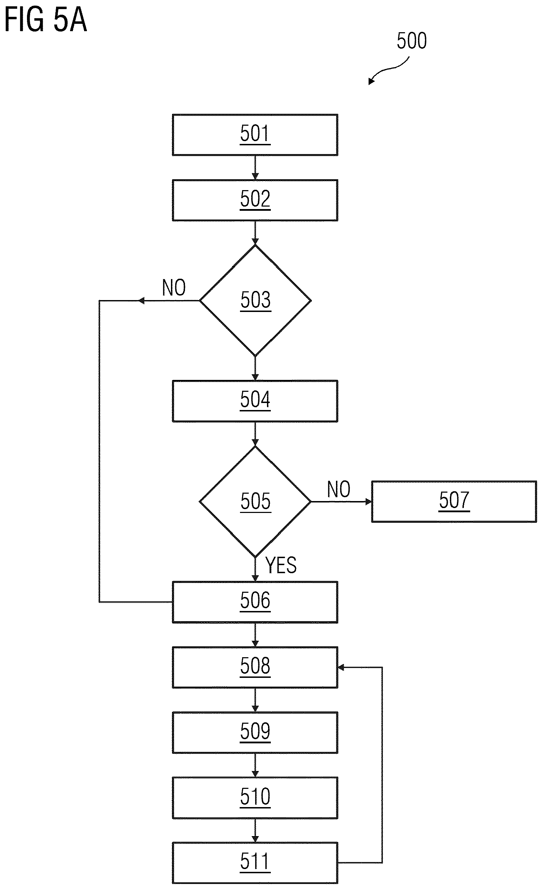

FIGS 5A-5B illustrate process flow charts 500 of computer-implemented methods for optimizing a power plant 100 shown in FIG 2, according to various embodiments of the present disclosure.

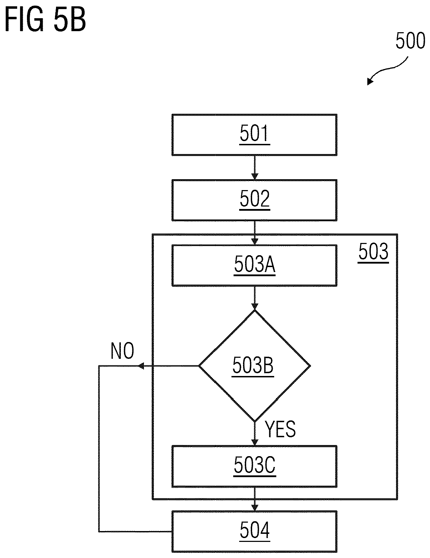

More particularly, FIG 5A illustrates a process flow chart 500 of a computer-implemented method for generating a power plant database 304 shown in FIG 3, for optimizing a power plant 100 and FIG 5B illustrates a process flow chart 500 of a computer-implemented method for optimizing one or more valves 201-204 deployable in a power plant 100 using the power plant database 304, for optimizing the power plant 100.

As shown in FIG 5A, at step 501, the computer implemented method obtains power plant data associated with each of one or more power plants 100. The power plant data corresponding to each power plant 100 comprises, for example, valve data associated with each valve 201-204 deployed in the power plant 100, said valve data including for example a valve size of each valve 201-204, a mass flow data associated with each valve 201-204 such as steam mass flow rate through the HP bypass valve 201, the IP bypass valve 202, the LP bypass valve 203, or the warm-up valve 204, for a predefined time period such as one year or two years, an outlet pressure such as separator outlet pressure, associated with one or more of the valves 201-204, and/or a power output of each generator G employed in the power plant 100. The aforementioned power plant data may include simulation data generated by simulating the power plant 100 intended to be constructed and/or power plants 100 already constructed and operational.

At step 502, the computer implemented method obtains a capacity of the power plant 100 from the power plant data. The capacity basically refers to a power generation capacity of the power plant 100. The capacity, for example, may be in Megawatts.

At step 503, the computer implemented method based on the capacity of the power plant 100 and the associated power plant data, determines whether one or more of the bypass valves 201-204 is being underutilized. For example, at step 503, the computer implemented method determines whether the steam mass flow through the HP bypass valve 201 is greater than a predefined percentage threshold of the net flow capacity of the HP bypass valve 201.

The predefined percentage threshold may be chosen based on a level of optimization desired by the power plant designers. For example, if a maximum level of optimization is required then this predefined percentage threshold may be set to 40% such that the computer implemented method determines whether the steam mass flow through the bypass valve is greater than 40% of its net flow capacity. In this case, if the steam mass flow is less than 40% then the bypass valve can be downsized by up to 60% of its current size, thereby, providing maximum optimization. Thus, the predefined percentage threshold may be a user defined value.

Alternatively, the computer implemented method generates the predefined percentage threshold as a recommendation based on a probabilistic approach by plotting the power plant data and more specifically the valve data with respect to the time for which the valve was operational so as to find a standard probabilistic distribution of the steam mass flow through the bypass valve. For example, if this probabilistic distribution shows that the steam mass flow through the bypass valve is typically concentrated in a window of about 60% of its net flow capacity then the predefined percentage threshold may be set to 60%. This value of 60% may further be varied based on valve data observed across multiple power plants 100 of similar power generation capacities and/or similar physical characteristics.

If the computer implemented method determines that the steam mass flow through the bypass valve 201-204 is greater than the predefined percentage threshold of the net flow capacity, then at step 504, the computer implemented method, using the power plant data, determines the time period for which the bypass valve 201-204 allows the mass flow therethrough which is more than predefined percentage threshold.

At step 505, the computer implemented method compares this time period with a prescribed time variance. The prescribed time variance is defined based on the power plant capacity and the maximum internal pressure and the maximum internal temperature allowed in a power plant 100. For example, the prescribed time variance is up to 20%. This implies that stress developed in the power plant 100 as a result of pressure and/or temperature increase beyond the corresponding design values, doesn't exceed the maximum allowable stress by 20% when an event duration occurs for not more than one hour at any one time and not more than eighty hours per year.

Thus, at step 505, if the mass flow through the valve 201-204 is more than the predefined percentage threshold, for example, the mass flow through the valve is greater than 60% of its net flow capacity for a time duration lesser than or equal to the prescribed time variance, that is 20%, then at step 506, the computer implemented method computes an optimal size for the valve 201-204 which is approximately 40% lesser than its existing size, that is, predefined threshold percentage subtracted from one hundred percent. Whereas, if the mass flow through the valve is more than the predefined percentage threshold, for example, the mass flow through the valve 201-204 is more than 60% of its net flow capacity for a time duration greater than or equal to the prescribed time variance, that is greater than 20%, then at step 507, the computer implemented method does not compute an optimal size for the valve 201-204, that is, there is no need to modify the existing size of the valve 201-204. This is because if the valve size is reduced for such a case where the mass flow is more than 60% for more than 20% of the time duration, it may result in non-compliance to the allowable stress limits.

The steps from 503-507 are repeated for each of the valves 201-204 including the HP bypass valve 201, the IP bypass valve 202, the LP bypass valve 203, and/or the warm-up valve 204 thereby, computing optimal sizes for each of the valves 201-204 for optimization of each of these valves 201-204 and thereby, the power plants 100.

At step 508, the computer implemented method stores the optimal sizes of the valves 201-204 in the power plant database 304 along with the power generation capacity of the power plant 100 and power plant data associated with the power plant 100. For example, the power plant data within the power plant database 304 is categorized based on one or more power plant parameters associated with the power plant 100 such as a type of fuel to be used for power generation, environmental conditions in the geographical zone where the power plant 100 is deployed, equipment installed at the power plant, capacity of power generation of the power plant 100, associated optimal sizes of the valves 201-204, etc.

Furthermore, at step 509, the computer implemented method extracts from the valve data, the mass flow rate and the capacity of the warm-up valve 204. In a combined cycle power plant 100, the warm-up valve 204 is typically unused during steam turbine bypass operation. Thus, based on this unused capacity of the warm-up valve 204 and the reduced sizes of the HP bypass valve 201 and the warm-up valve 204, the computer implemented method at step 510, computes a ratio for distributing the mass flow through the optimized HP bypass valve 201 and the warm-up valve 204, especially during the steam turbine bypass operation. For example, the warm-up valve 204 may have a fixed mass flow therethrough of 15 kg/s and the total mass flow expected to be borne by the HP bypass valve 201 is 100 kg/s then the mass flow through the HP bypass valve 201 is considered to be (100-15) kg/s, that is, 85 kg/s. Accordingly, the size of the HP bypass valve 201 can be further reduced in proportion with the now reduced mass flow therethrough.

At step 511, based on the above distribution, the computer implemented method computes a further optimized size of the HP bypass valve 201 by further reducing its original size based on the diverted mass flow from the warm-up valve 204. The computer implemented method stores this further optimized size of the HP bypass valve 201 in the power plant database 304 by redirecting the process flow to step 508. Thus, the power plant database 304 includes two possible optimized sizes of the HP bypass valve 201 based on whether or not there is partial diversion of steam mass flow through the warm-up valve 204 during the steam turbine bypass operation in a combined cycle power plant 100.

As shown in FIG 5B, the computer implemented method at step 501, obtains the power plant data as an input from a user using the power plant optimization system 300 that the computer implemented method disclosed herein employs for optimizing the power plant 100.

The computer implemented method at step 502, obtains the capacity of power generation of the power plant 100 from the power plant data. Alternatively, at step 502, the computer implemented method receives the power plant capacity as an input from a user using the power plant optimization system 300 that the computer implemented method disclosed herein employs for optimizing the power plant 100. Also, based on the capacity, the computer implemented method obtains the power plant data from the power plant database 304 storing therewithin power plant data associated with multiple power plants 100.

At step 503, the computer implemented method probabilistically determines an optimal size for valve(s) 201-204 deployable in the power plant 100, based on power plant data associated with multiple power plants 100 stored in the power plant database 304 and the capacity received as a user input. At step 503A, the computer implemented method retrieves from the power plant database the optimal sizes of the valves, that is the bypass valves 201-203 and the warm-up valve 204 corresponding to the capacity. At step 503B, the computer implemented method verifies with the user whether he/she wishes to further optimize the bypass valve such as the HP bypass valve 201 by diverting mass flow through the warm-up valve 204, for example, during a turbine bypass operation. If yes, then at step 503C the computer implemeted method retreives from the power plant database 304 the further optimized size of the HP bypass valve 201. If not, then the process flow is directed to step 504.

At step 504, the computer implemented method generates a recommendation for design of the valve(s) 201-204 deployable in the power plant 100 and renders it to the user of the power plant optimization system 300 via a graphical user interface 305. The recommendation consists of physical dimensions of the valve(s) 201-204 for the associated power generation capacity of the power plant 100 being designed and/or optimized.

Where databases are described such as power plant database 304, it will be understood by one of ordinary skill in the art that (i) alternative database structures to those described may be readily employed, and (ii) other memory structures besides databases may be readily employed. Any illustrations or descriptions of any sample databases disclosed herein are illustrative arrangements for stored representations of information. Any number of other arrangements may be employed besides those suggested by tables illustrated in the drawings or elsewhere. Similarly, any illustrated entries of the databases represent exemplary information only; one of ordinary skill in the art will understand that the number and content of the entries can be different from those disclosed herein. Further, despite any depiction of the databases as tables, other formats including relational databases, object-based models, and/or distributed databases may be used to store and manipulate the data types disclosed herein. Likewise, object methods or behaviors of a database can be used to implement various processes such as those disclosed herein. In addition, the databases may, in a known manner, be stored locally or remotely from a device that accesses data in such a database. In embodiments where there are multiple databases in the system, the databases may be integrated to communicate with each other for enabling simultaneous updates of data linked across the databases, when there are any updates to the data in one of the databases.

The present disclosure can be configured to work in a network environment comprising one or more computers that are in communication with one or more devices via a network. The computers may communicate with the devices directly or indirectly, via a wired medium or a wireless medium such as the Internet, a local area network (LAN), a wide area network (WAN) or the Ethernet, a token ring, or via any appropriate communications mediums or combination of communications mediums. Each of the devices comprises processors, some examples of which are disclosed above, that are adapted to communicate with the computers. In an embodiment, each of the computers is equipped with a network communication device, for example, a network interface card, a modem, or other network connection device suitable for connecting to a network. Each of the computers and the devices executes an operating system, some examples of which are disclosed above. While the operating system may differ depending on the type of computer, the operating system will continue to provide the appropriate communications protocols to establish communication links with the network. Any number and type of machines may be in communication with the computers.

The present disclosure is not limited to a particular computer system platform, processor, operating system, or network. One or more aspects of the present disclosure may be distributed among one or more computer systems, for example, servers configured to provide one or more services to one or more client computers, or to perform a complete task in a distributed system. For example, one or more aspects of the present disclosure may be performed on a client-server system that comprises components distributed among one or more server systems that perform multiple functions according to various embodiments. These components comprise, for example, executable, intermediate, or interpreted code, which communicate over a network using a communication protocol. The present disclosure is not limited to be executable on any particular system or group of systems, and is not limited to any particular distributed architecture, network, or communication protocol.

The foregoing examples have been provided merely for the purpose of explanation and are in no way to be construed as limiting of the present disclosure disclosed herein. While the disclosure has been described with reference to various embodiments, it is understood that the words, which have been used herein, are words of description and illustration, rather than words of limitation. Further, although the disclosure has been described herein with reference to particular means, materials, and embodiments, the disclosure is not intended to be limited to the particulars disclosed herein; rather, the disclosure extends to all functionally equivalent structures, methods and uses, such as are within the scope of the appended claims. Those skilled in the art, having the benefit of the teachings of this specification, may affect numerous modifications thereto and changes may be made without departing from the scope of the disclosure in its aspects.

## Claims

1. A power plant optimization system (300) for optimizing a power plant (100), **characterized by**:
- a data acquisition module (301) configured to obtain a capacity of the power plant (100) for generating power;
- a data processing module (302) configured to probabilistically determine, based on power plant data associated with multiple power plants (100) and the capacity, an optimal size for one or more valves (201-204) deployable in the power plant (100), wherein the valves (201-204) comprise one or more of bypass valves (201-203) and warm-up valves (204); and
- the data processing module (302) configured to generate, based on the optimal size, a recommendation for design of the one or more valves (201-204) deployable in the power plant (100).

2. The power plant optimization system (300) according to claim 1, wherein the power plant (100) is a combined cycle power plant.

3. The power plant optimization system (300) according to claim 1, wherein the power plant data comprises valve data associated with each of the valves (201-204) and a power output of each generator (G) deployed in the power plant (100) .

4. The power plant optimization system (300) according to claim 3, wherein the valve data comprises a valve size of each of the valves (201-204), mass flow data associated with each of the valves (201-204), and an outlet pressure associated with each of the valves (201-204).

5. The power plant optimization system (300) according to claim 1, further comprising a power plant database (304) configured to store therewithin the power plant data and the capacity of power generation of the power plant (100).

6. The power plant optimization system (300) according to claim 1, wherein the data processing module (302) is further configured to determine, based on the capacity, the optimal size for the one or more valves (201-204) from a power plant database (304), wherein the power plant database (304) comprises an optimal size for each of the valves (201-204) deployable in the power plant (100) corresponding to the capacity of the power plant (100), such that there is no underutilization of the valves (201-204).

7. The power plant optimization system (300) according to any one of the claims 1-6, comprising:
- the data acquisition module (301) configured to obtain, based on valve data of the power plant data associated with multiple power plants (100), a percentage mass flow through each of the valves (201-204); and
- the data acquisition module (301) configured to obtain, based on the power plant data associated with multiple power plants (100), a duration for the percentage mass flow through each of the valves (201-204);
- the data processing module (302) configured to determine from the valves (201-204), based on the percentage mass flow and the duration associated therewith, one or more underutilized valves (201-204), wherein the one or more underutilized valves (201-204) allow therethrough the percentage mass flow greater than or equal to a predefined percentage threshold for the duration lesser than or equal to a prescribed time variance;
- the data processing module (302) configured to compute an optimal size for each of the underutilized valves (201-204) based on the percentage mass flow and the predefined percentage threshold; and
- the data processing module (303) configured to generate a power plant database (304) and store into the power plant database (304), the optimal size for each of the underutilized valves (201-204), the power plant data associated with the corresponding power plant (100) in which the underutilized valves (201-204) are deployed, and a capacity of generation of the power plant (100).

8. A computer implemented method (500) for optimizing a power plant (100), **characterized by**:
- obtaining (502) a capacity of the power plant (100) for generating power;
- probabilistically determining (503), based on power plant data associated with multiple power plants (100) and the capacity, an optimal size for one or more valves (201-204) deployable in the power plant (100), wherein the valves (201-204) comprise one or more of bypass valves (201-203) and warm-up valves (204); and
- generating (504), based on the optimal size, a recommendation for design of the one or more valves (201-204) deployable in the power plant (100).

9. The computer implemented method (500) according to claim 8, wherein the power plant (100) is a combined cycle power plant.

10. The computer implemented method (500) according to claim 8, wherein the power plant data comprises valve data associated with each of the valves (201-204) and a power output of each generator (G) deployed in the power plant (100) .

11. The computer implemented method (500) according to claim 10, wherein the valve data comprises a valve size of each of the valves (201-204), mass flow data associated with each of the valves (201-204), and an outlet pressure associated with each of the valves (201-204).

12. The computer implemented method (500) according to claim 8, wherein the power plant data and the capacity of power generation of the power plant (100) are stored in a power plant database (304).

13. The computer implemented method (500) according to claim 8, wherein probabilistically determining (503) based on the capacity and power plant data associated with multiple power plants (100), an optimal size for one or more valves (201-204) deployable in the power plant (100), comprises determining, based on the capacity, the optimal size for the one or more valves (201-204) from a power plant database (304), wherein the power plant database (304) comprises an optimal size for each of the valves (201-204) deployable in the power plant (100) corresponding to the capacity of the power plant (100), such that there is no underutilization of the valves (201-204).

14. The computer implemented method (500) according to claim 13, further comprising generating the power plant database (304) by:
- obtaining, based on valve data of the power plant data associated with multiple power plants (100), a percentage mass flow through each of the valves (201-204);
- obtaining, based on the power plant data associated with multiple power plants (100), a duration for the percentage mass flow through each of the valves (201-204) ;
- determining from the valves (201-204), based on the percentage mass flow and the duration associated therewith, one or more underutilized valves (201-204), wherein the one or more underutilized valves (201-204) allow therethrough the percentage mass flow greater than or equal to a predefined percentage threshold for the duration lesser than or equal to a prescribed time variance;
- computing an optimal size for each of the underutilized valves (201-204) based on the percentage mass flow and the predefined percentage threshold; and
- storing into the power plant database (304), the optimal size for each of the underutilized valves (201-204), the power plant data associated with the corresponding power plant (100) in which the underutilized valves (201-204) are deployed, and a capacity of generation of the power plant (100).
